# EUROPEAN PATENT APPLICATION

(11) **EP 1 519 373 A2**
(43) Date of publication of application: **30.03.2005**
(21) Application number: 04022347.1
(22) Date of filing: 20.09.2004
(51) Int. Cl.: G11B 17/028

(54) **Disk device having clamp mechanism**

(30) Priority: 26.09.2003 JP 2003335499
(71) Applicant: ORION ELECTRIC CO., Ltd., Takefu-shi, Fukui 915-8555 (JP)
(72) Inventor: Asabata, Tatsuhiro, c/o Orion Electric Co., Ltd., Takefu-shi Fukui, 915-8555 (JP)
(74) Representative: VOSSIUS & PARTNER

(57) **Abstract**

To provide a disk device having a clamp mechanism, which can correctly clamp a disk mounted on a turntable, which can regulate eccentricity at the turning time and can prevent slips and facial vibrations, and which can prevent a clamper from becoming loose during the turning motions, the clamp mechanism comprises a clamper (13) integrally formed of a resin material, a magnet (18) and a cover (19). The clamper includes a disk-shaped clamp unit (20), a cylindrical rib (21) formed at the central portion of the clamp unit, a bottom plate (22) formed a housing space (24) to house the magnet in the rib and to be covered by the cover, a boss (23b) projected from the lower face side of the center of the bottom plate and adapted to be fitted and positioned in a recess of the upper face of a turntable (11). The cylindrical rib (21) is provided on its upper edge with at least two such L-shaped hook portions (25) at equal intervals as each includes a connection member (34) extended vertically, and a retention member (27) extended horizontally outward from the leading end of the connection member and having a bulge (28) on its lower face (36). The cover (19) is provided in its outer circumference with engagement holes (30) at positions individually corresponding to the hook portions. Each of the engagement holes (30) includes a communication portion (32) for allowing the connection member of the corresponding hook portion to pass therethrough, an insertion portion (31) formed to communicate with one end side of the communication portion for inserting the corresponding hook portion, and an engagement portion (33) formed to communicate with the other end side of the communication portion and made smaller than the retention member of the corresponding hook portion, for fitting the bulge on the lower face of the retention member of the corresponding hook portion.

## Description

The present invention relates to a disk device, which is characterized in a clamp mechanism for clamping a disk on a turntable.

The disk device is enabled to read signals recorded in a disk by using an optical pickup. In this case, the disk device is constructed such that the disk is mounted on the turntable and is turned after clamped, and such that the optical pickup is moved at a predetermined speed in the radial direction of the disk. The turntable is directly connected to the spindle of a drive motor so that it is turned at a high speed. If the disk is merely mounted on the turntable, it may go out of position during the turns, or a slip may occur between the disk and the turntable thereby causing a phase difference in the angular velocity. Thus, the disk device is made to clamp the disk.

A clamper of the clamp mechanism is rotatably born to rotate together with the turntable so that it can rotate the disk mounted on the turntable and clamped by itself. Here is adopted a mechanism, which utilizes the attractive force of a magnet as the clamp means of the clamper. In the technique for clamping the disk by utilizing the magnet, a magnetic member to be attracted by the magnet is disposed on the side of the turntable.

Here, the disk mounted on the turntable can be rotated by dint of being clamped, at the predetermined speed without being demounted from the turntable. However, the positional relation between the clamper and the turntable has to be precise. If an unbalanced load occurs in the turntable or the clamper, it induces rotation irregularities or vibrations. In case the disk is clamped by utilizing the attractive force of the magnet, the position of the clamper relative to the turntable is displaced, if the mechanism holding the magnet rattles, so that the rotation irregularities or vibrations grow serious.

Thus, there has been known a clamp mechanism disclosed in JP-A-2000-30331, in which the rotation characteristics of the disk are improved by enhancing the precision in the positional relation between a board mounting the clamp mechanism and the clamper thereby preventing an engagement pawl mounting the clamper on the mounting board from disengaging.

The "Disk clamp device" according to that JP-A-2000-30331 is constituted of a clamp member for holding the disk on the placing portion of the turntable at the time of clamping operation and a mounting base plate, whereon an engagement hole having a constricting portion formed at the end portion and engaging with an engaging pawl formed on the clamp member is formed and also a magnet attracting a magnetic body stuck to a centering portion formed on the turntable is mounted and fixed.

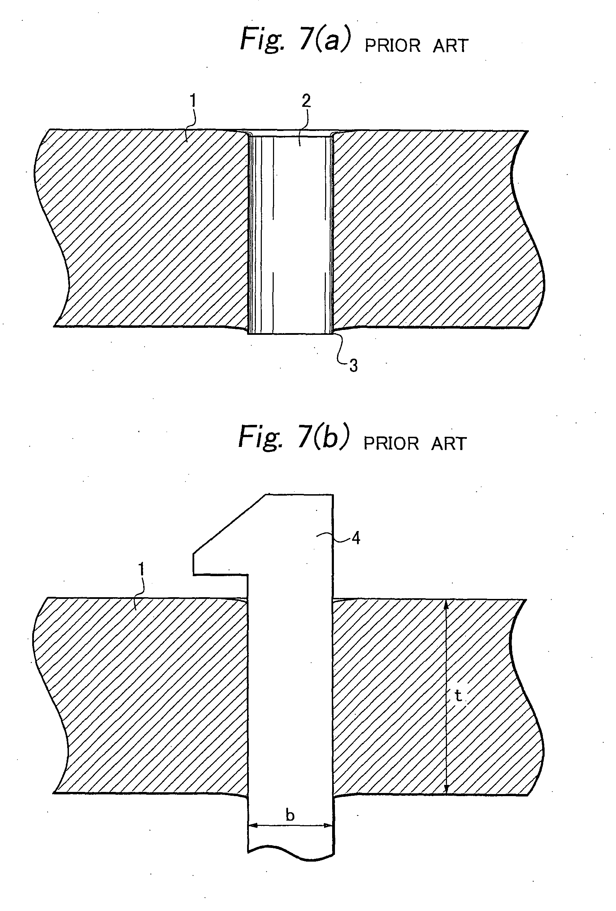

Despite of this construction, the disk clamp device described above has the following problems:
(1) In order to fixedly fit the constricting portion formed at the end portion of the engagement hole of the mounting board and the engagement pawl of the clamp member, a burr 3 is formed when the engagement hole 2 of the mounting board 1 is pressed out, the engagement pawl 4 to engage with the engagement hole 2 may be scraped by that burr 3, and the resultant chips may migrate as foreign substances into the disk device, as partially shown as enlarged sections in Figs. 7(a) and 7(b);
(2) The engagement pawl 4 is scraped by the engagement hole 2 of the mounting board 1 so that their fitting state becomes loose when the mounting/demounting operations of the engagement pawl 4 on/from the mounting board 1 are repeated;
(3) The width size "b" in the engagement pawl 4 of the clamp member has to be made slightly larger so that the pawl 4 may be fitted in the constricting portion formed in the engagement hole 2 of the mounting board 1. In case the width size b is excessively enlarged due to its dispersions, the fitting itself may become impossible, or an excessive fitting may break the engagement pawl 4;
(4) Since the constricting portion formed in the end portion of the engagement hole of the mounting board 1 and the engagement pawl 4 of the clamp member are fixedly engaged with each other, the thickness of the mounting board 1 has to be enlarged to prevent the fitted engagement pawl 4 from being broken and to increase the contact area between the engagement pawl 4 and the mounting board 1. As a result, the height of the damper is enlarged to enlarge the size of the device;
(5) In order to keep the fitting state between the mounting board 1 and the clamp member too, the constricting portion and the engagement pawl have to be disposed in at least three portions so that the shape is complicated although the portions are small; and
(6) In case the mounting board 1 and the clamp member are manually turned relative to each other when they are to be fitted, the fitted state is dispersed depending on the skills of the worker, and a restriction arises on the manual fitting.

Thus, the conventional clamp device has the problems described above. The invention contemplates to solve those problems and has an object to provide a disk device having a clamp mechanism, which can correctly clamp a disk mounted on a turntable, which can regulate eccentricity at the turning time and can prevent slips and facial vibrations, and which can prevent a clamper from becoming loose during the turning motions.

According to the invention, there is provided a disk device having a clamp mechanism for clamping a disk mounted on a turntable, wherein said clamp mechanism comprises a damper integrally formed of a resin material, a magnet, and a cover; said clamper including a disk-shaped clamp unit, a cylindrical rib formed at the central portion of the clamp unit, a bottom plate formed a housing space to house the magnet in the rib and to be covered by the cover, a boss projected from the lower face side of the center of the bottom plate and adapted to be fitted and positioned in a recess of the upper face of a turntable; said cylindrical rib being provided on its upper edge with at least two such L-shaped hook portions at equal intervals as each includes a connection member extended vertically and having a bulge on its lower face, and a retention member extended horizontally outward from the leading end of said connection member; said cover being provided in its outer circumference with engagement holes at positions individually corresponding to said hook portions; and each of said engagement holes including a communication portion for allowing the connection member of the corresponding hook portion to pass therethrough, an insertion portion formed to communicate with one end side of said communication portion for inserting said corresponding hook portion, and an engagement portion formed to communicate with the other end side of said communication portion and made smaller than the retention member of said corresponding hook portion, for fitting the bulge on the lower face of the retention member of said corresponding hook portion.

The distance between the lower face of the retention member and the upper edge of the cylindrical rib may be made equal to or slightly smaller than the thickness of the cover. As a result, the fitting relation between the bulge of the lower face of the retention member and the engagement portion of the cover can be made reliable so that the relation is neither broken nor loosened during the rotation of the clamper.

A magnetic member may be mounted on the turntable and can attract the magnet disposed in the clamper to each other. The cover may be manufactured by punching out an iron sheet so that it prevents the magnet mounted in the clamper from being demounted and exhibits not only the clamper-supporting role but also a function to enhance the magnetic force of the magnet. In other words, a back yoke is established to improve the attractive force to attract the magnetic member on the turntable side.

According to the disk device having the clamp mechanism of the invention, the bulges formed on the lower faces of the retention members of the hook portions disposed at the clamper engage with the engagement portions of the cover so that the cover neither comes out of the damper nor releases the housed magnet. Moreover, the cover neither becomes loose nor rotates eccentrically so that it can prevent the slip of the rotating disk, the vibrations and the facial vibrations.

The cover is made of a magnetic material such as iron so that it can enhance the magnetic force of the magnet housed in the clamper thereby attracting the magnetic member of the turntable more forcibly. Moreover, the works to mount the cover can be simply performed merely by inserting the hook portions of the damper into the insertion portions and turning them to the engagement portions, and the demounting works are also facilitated. At this time, the burrs, which are left after punched by a press in the engagement portions, the communication portions and the insertion portions of the cover do not fall as chips.
Fig. 1 is a longitudinal section showing the state, in which a disk mounted on a turntable in a disk device provided with a clamp mechanism according to an embodiment of the invention is clamped;
Fig. 2(a) is a top plan view showing the clamper of the clamp mechanism, Fig. 2(b) is a longitudinal section of the same; Fig. 2(c) is a bottom view, and Fig. 2(d) is a partially enlarged longitudinal section;
Fig. 3(a) is a top plan view showing a cover in the clamp mechanism, Fig. 3(b) is a side elevation of the same, and Fig. 3(c) is a partially enlarged top plan view of the same;
Fig. 4 presents longitudinal sections showing a procedure for assembling the clamp mechanism;
Figs. 5(a), 5(b) and 5(c) are top plan views showing a procedure for attaching a cover on the clamper;
Figs. 6(a), 6(b) and 6(c) are top plan views showing other shapes of an engagement hole formed in the cover, respectively; and
Figs. 7(a) and 7(b) are longitudinal sections showing a mounting structure for mounting a mounting board (or cover) on a clamper in a clamp mechanism according to the conventional art.

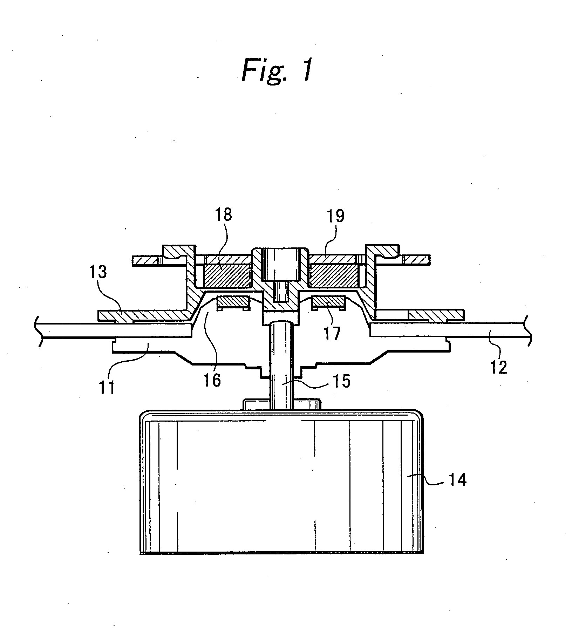

Fig. 1 shows the state, in which a disk 12 is mounted on a turntable 11 of a disk device and clamped by a clamper 13. The turntable 11 is mounted on a spindle 15 of a motor 14. The central portion of the disk-shaped turntable 11 is formed an upward bulge 16, and a magnetic member 17 is mounted on the upper face of the bulge 16. The disk 12 is provided at its center with a hole, in which the center bulge 16 of the turntable 11 is fitted so that the disk 12 is correctly mounted in position on the turntable 11.

Moreover, the disk 12 is pushed downward by the clamper 13 so that it may not be demounted from the turntable 11. This pushing force is exemplified by the magnetic force of a magnet 18 housed in the clamper 13. Specifically, the magnet 18 and the magnetic member 17 mounted on the turntable 11 attract each other so that the clamper 13 exerts the pushing force on the face of the disk 12. The ring-shaped magnet 18 is housed in a cylindrical rib formed in the central portion of the clamper 13, and is covered with a cover 19 so that it may not come out.

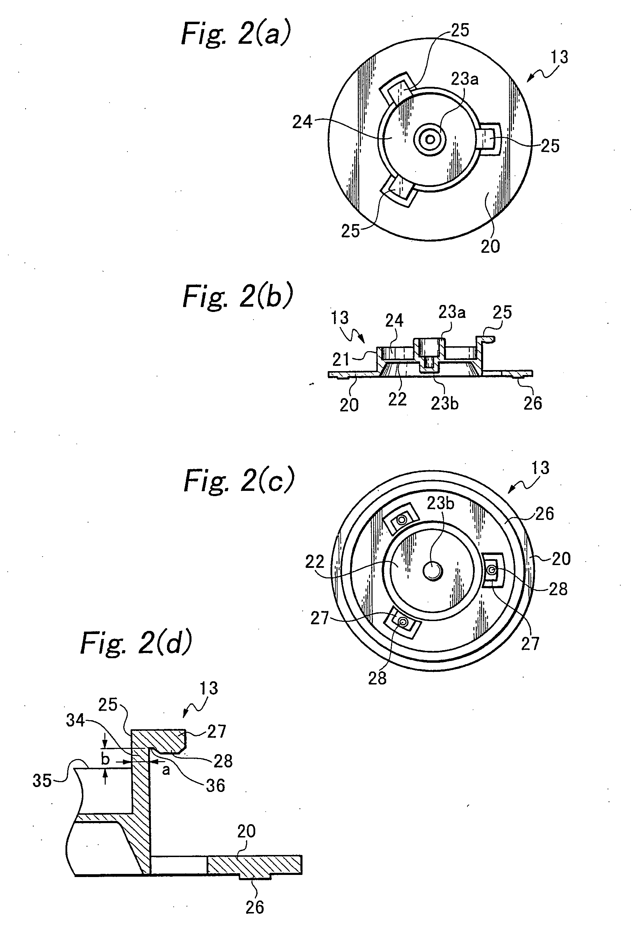

As shown in Figs. 2(a), 2(b), 2(c) and 2(d), the clamper 13 includes a disk-shaped clamp unit 20, and a cylindrical rib 21 formed at the central portion of the clamp unit 20. A bottom plate 22 is formed at the intermediate portion of the inner wall of the rib 21. At the center of the bottom plate 22, there are formed a cylindrical projection 23a projected upward, and a boss 23b projected downward. The cylindrical projection 23a and the inner wall of the rib 21 define a doughnut-type housing space 24 for housing the magnet 18. On the bottom face of the clamp unit 20, on the other hand, there is formed a projecting ring 26, which is concentric with the boss 23b.

The rib 21 is provided at its upper edge 35 with three L-shaped hook portions 25 at equal intervals. Each hook portion 25 includes a vertically extended connection member 34 and a retention member 27 extended horizontally outward. A frusto-conical bulge 28 is formed on the lower face 36 of the retention member 27. Here, the clamper 13 is integrally molded of a synthetic resin material into such shape.

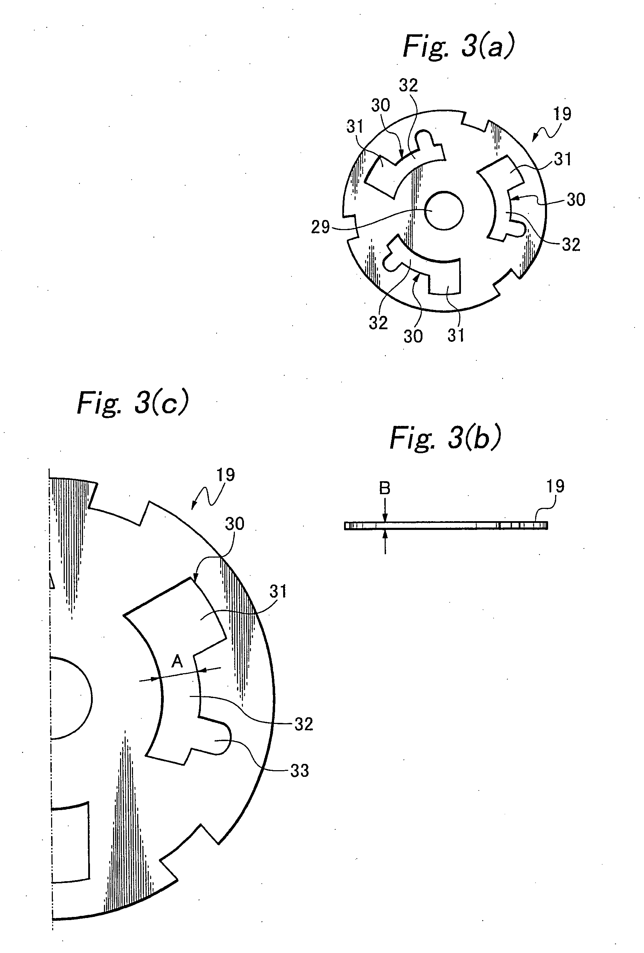

Figs. 3(a), 3(b) and 3(c) show the cover 19. This cover 19 is punched out from a metallic magnetic material such as an iron sheet, and has a center hole 29 at its center. Three engagement holes 30 are formed at equal intervals in a concentric circle of the center hole 29. Each engagement hole 30 forms an insertion portion 31, a communication portion 32 and an engagement portion 33.

Here, the insertion portion 31 is formed to a size to fit the hook portion 25 formed in the rib 21 of the clamper 13. The communication portion 32 is formed to have such a width size A (A > a) to allow the connection member 34 of the hook portion 25 to move therein. The frusto-conical bulge 28 formed on the lower face of the retention member 27 can fit in the engagement portion 33 formed in the outer circumference side of the leading end portion of the communication portion 32 but not the entirety of the retention member 27.

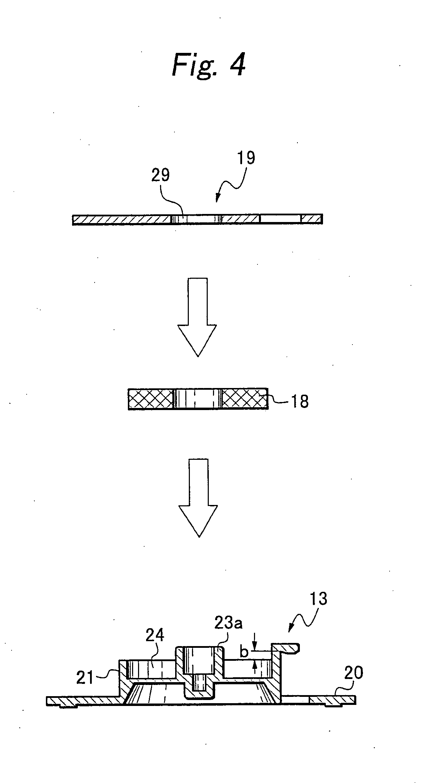

Fig. 4 shows the procedure for assembling the clamper 13. The doughnut-type magnet 18 is housed in the housing space 24 of the clamper 13. Then, the cylindrical projection 23a of the clamper 13 is fitted and positioned in the center hole 29 of the cover 19, and the cover 19 is attached downward to the clamper 13. As a result, the magnet 18 is prevented from coming down from the housing space 24. Thus, the invention is given a mounting structure, in which the cover 19 can be attached by a single action and in which the cover 19 once attached does not come out by itself but can be simply removed, as will be described hereinafter.

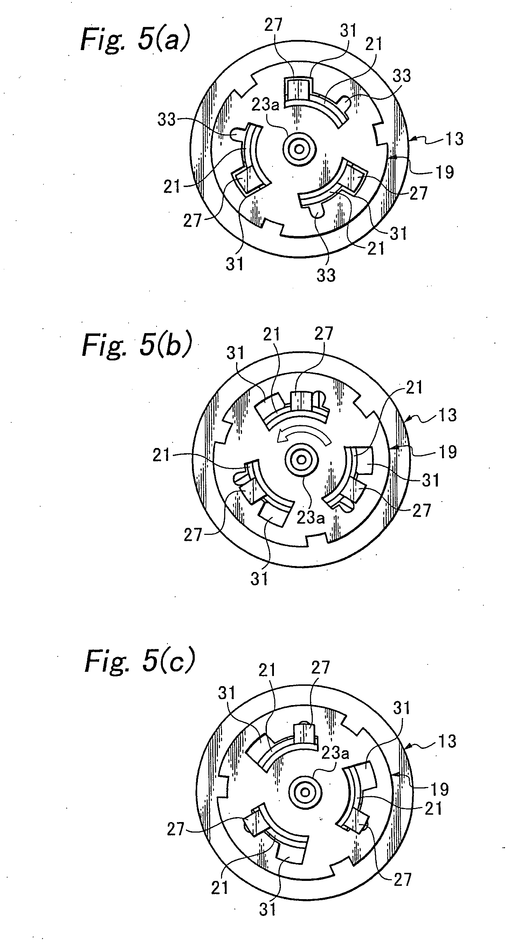

The cover 19 is attached to the clamper 13 in the following method. First of all, the individual hook portions 25 projecting upward at equal intervals from the cylindrical rib 21 of the clamper 13 are inserted so far into the corresponding insertion portions 31 that they project to over the cover 19, as shown in Fig. 5(a). At this time, the cover 19 is placed on the upper edge 35 of the cylindrical rib 21.

Next, the cover 19 is turned counter-clockwise (in the direction of arrow), as shown in Fig. 5(b), to move the connection members 34 of the hook portions 25 in the communication portions 32 of the engagement holes 30. When the connection members 34 move to the leading ends of the communication portions 32 so that the retention members 27 are positioned in the engagement portions 33 (as referred to Fig. 5(c)), the bulges 28 on the lower faces of the retention members 27 are individually fitted in the engagement portions 33.

The bulges 28 are fitted in the engagement portions 33. However, the retention members 27 are larger than the engagement portions 33 so that they themselves perform a stopper function to prevent the cover 19 from coming out. In other words, the bulges 28 inserted from the insertion portions 31 slide together with the retention members 27 to the engagement portions 33 to be fitted in the engagement portions 33.

Here, in order that the cover 19 may not rattle with the bulges being fitted in the engagement portions 33, the cover 19 has its thickness "B" set slightly larger or substantially equal to the distance "b" between the upper edge 35 of the cylindrical rib 21 of the clamper 13 and the lower faces 36 of the retention members 27.

Therefore, the bulges 28 are fitted in the engagement portions 33 so that they do not come out. When the cover 19 is to be removed, it is turned clockwise so that the frusto-conical bulges 28 are disengaged from the engagement portions 33.

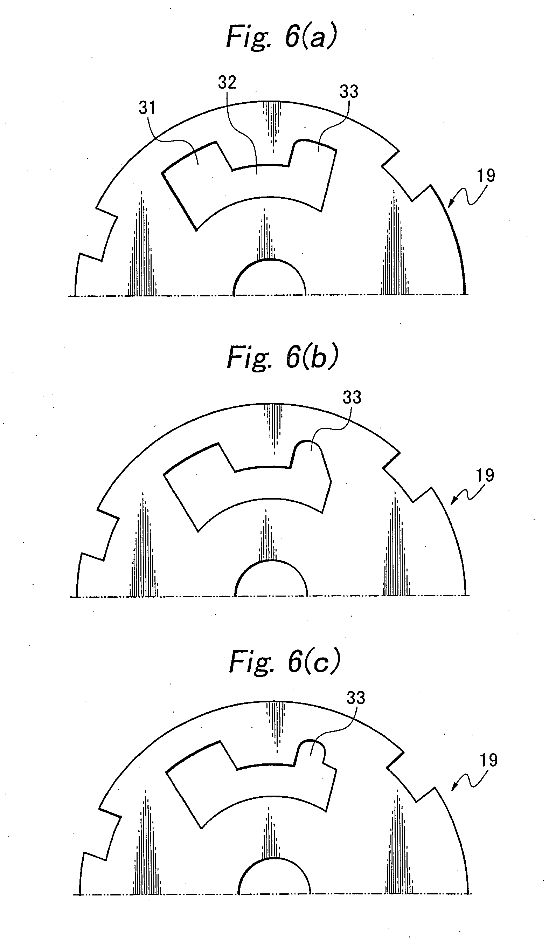

Figs. 6(a), 6(b) and 6(c) show another example of the shape of each of the engagement portions 33. The engagement portion 33 forms a hole smaller than the retention member 27, in which the bulge 28 is fitted. The retention member 27 is formed to perform the function of the stopper.

As has been described hereinbefore, the disk device of the invention is given the structure, in which the magnet is housed in the clamper for clamping the disk mounted on the turntable, and in which the cover provided for preventing the magnet from coming out from the housing space can be simply mounted/demounted and positioned without any misalignment.

## Claims

1. A disk device having a clamp mechanism for clamping a disk mounted on a turntable, wherein said clamp mechanism comprising a clamper (13) integrally formed of a resin material, a magnet (18), and a cover (19), **characterized in that**:
said clamper (13) including a disk-shaped clamp unit (20), a cylindrical rib (21) formed at the central portion of the clamp unit, a bottom plate (22) formed a housing space (24) to house the magnet in the rib and to be covered by the cover, a boss (23b) projected from the lower face side of the center of the bottom plate and adapted to be fitted and positioned in a recess of the upper face of a turntable (11),
said cylindrical rib (21) being provided on its upper edge with at least two such L-shaped hook portions (25) at equal intervals as each includes a connection member (34) extended vertically, and a retention member (27) extended horizontally outward from the leading end of said connection member and having a bulge (28) on its lower face (36),
said cover (19) being provided in its outer circumference with engagement holes (30) at positions individually corresponding to said hook portions (25), and
each of said engagement holes (30) including a communication portion (32) for allowing the connection member (34) of the corresponding hook portion to (25) pass therethrough, an insertion portion (31) formed to communicate with one end side of said communication portion for inserting said corresponding hook portion, and an engagement portion (33) formed to communicate with the other end side of said communication portion and made smaller than the retention member (27) of said corresponding hook portion, for fitting the bulge on the lower face of the retention member of said corresponding hook portion.

2. A disk device having a clamp mechanism according to Claim 1, wherein a distance between the lower face (36) of said retention member (27) and the upper edge (35) of said cylindrical rib (21) is made equal to or slightly smaller than the thickness of said cover (19).

3. A disk device having a clamp mechanism according to Claim 1 or 2, wherein said cover (19) is manufactured by punching out an iron sheet.
